# EUROPÄISCHE PATENTSCHRIFT

(11) **EP 2 558 367 B1**
(45) Veröffentlichungstag und Bekanntmachung des Hinweises auf die Patenterteilung: **10.09.2014**
(21) Anmeldenummer: 10714191.3
(22) Anmeldetag: 12.04.2010
(51) Int. Cl.: B65B 1/36, B65G 53/46

(54) **VORRICHTUNG ZUM FÖRDERN VON MATERIAL MITTELS EINER HORIZONTALZELLENRADSCHLEUSE**
APPARATUS FOR CONVEYING MATERIAL BY MEANS OF A HORIZONTAL CELLULAR WHEEL SLUICE.
INSTALLATION POUR TRANSPORTER DES MATÉRIAUX AU MOYEN D' UNE VANNE À ROUE CELLULAIRE HORIZONTALE.

(43) Veröffentlichungstag der Anmeldung: 20.02.2013
(73) Patentinhaber: Schenck Process GmbH, 64293 Darmstadt (DE)
(72) Erfinder: KAHLE, Jens, 63303 Dreieich (DE)
(86) Internationale Anmeldenummer: PCT/EP2010/002248
(87) Internationale Veröffentlichungsnummer: WO 2011/127937

(56) Entgegenhaltungen:
- EP-A1- 1 900 659
- DE-A1- 2 461 696
- DE-A1- 4 031 156
- DE-B- 1 104 434
- DE-U- 1 973 975
- DE-U- 6 610 506

## Beschreibung

Die Erfindung betrifft eine Vorrichtung zum Fördern von Material mittels einer Horizontalzellenradschleuse.

Zellenradschleusen dienen üblicherweise zum Austragen bzw. Einspeisen von einem riesel- und/oder fließfähigen Schüttgut aus einem Behälter, z.B. einem Silo oder einem Bunker, in eine nachfolgende mechanische oder pneumatische Fördereinrichtung. Als Schüttgut kommen unterschiedlichste Gemenge in Betracht, die bezüglich ihrer Korngröße von Granulat bis zu pulverförmigen oder staubförmigen Stoffen reichen. Einer Zellenradschleuse wird z.B. als Bestandteil einer komplexen Förderanlage unter anderem die Aufgabe zuteil, eine nachfolgende Fördereinrichtung von dem Behälterdruck des zu fördernden Materials zu entlasten, wobei Sie darüber hinaus eine volumetrisch kontinuierliche Förderung des jeweiligen Materials, also insbesondere von Schüttgut, zur genauen Dosierung gewährleistet. Des Weiteren ermöglicht eine Zellenradschleuse in der Regel den Ausgleich von Druckdifferenzen, die zwischen dem Zufuhrbereich und dem Auslassbereich vor bzw. hinter der Zellenradschleuse herrschen.

Es sind verschiedene Ausführungsformen von Zellenradschleusen bekannt. Die vorliegende Erfindung bezieht auf eine Horizontalzellenradschleuse, z.B. in Ausführung einer sog. Durchblasschleuse oder einer sog. Austragsschleuse, die bevorzugt zum Fördern eines pulver- oder staubförmigen Schüttguts geeignet ist. Als auszutragendes Gemenge kommt insbesondere Kohlenstaub in Betracht, der aus einem Silo heraus in ein Förderrohr einer pneumatischen Fördereinrichtung einzuspeisen ist.

Die Wirkungsweise einer solchen Horizontalzellenradschleuse nach dem Stand der Technik beruht auf einem von außen angetriebenen Rotor, dem sogenannten Zellenrad, der eine vorgegebene Anzahl von Rotorblättern umfasst und dessen Drehachse passgenau in einem Gehäuse gelagert ist. Zwischen den Rotorblättern und dem Gehäuse bildet sich somit eine entsprechende Anzahl von Rotorzellen, im Weiteren als Zellen des Zellenrads bezeichnet, einer Zellenradschleuse aus, die sich um die Drehachse drehen. Während der Drehbewegung des Zellenrads wird ein durch die Zellenradschleuse zu förderndes Material durch eine erste Öffnung als Einlauföffnung der Zellenradschleuse aufgenommen und zu einer der Einlauföffnung bezüglich der Drehachse des Zellenrads gegenüberliegenden zweiten Öffnung, der Auslauföffnung, gefördert. Die Einlauföffnung ist hierzu mit einem Vorratsbehälter ausgerichtet, beispielsweise nach oben offen und unter einem Silo angeflanscht oder auch mit einem Aufgabetrichter ausgerichtet. Die Auslauföffnung ist in der Regel mit einer unter dieser angeordneten Auslass-Anschlusseinrichtung ausgerichtet, über welche weiterführende Anlagenteile, z.B. eine weitergehende Fördereinrichtung, angeschlossen sind.

Üblicherweise sind die Horizontalzellenradschleusen nach dem Stand der Technik mit jeweils einer einzigen Einlauf- und einer einzeigen Auslauföffnung ausgebildet, wobei die Auslass-Anschlusseinrichtung versetzt zur Mittelachse angeordnet ist. Eine Integration solcher Horizontalzellenradschleusen in Anlagen ist folglich häufig mit Schwierigkeiten verbunden.

Ferner bestimmt sich die Förderleistung aus dem Inhalt an zu förderndem Material, den die Zellen aufnehmen können und der Drehgeschwindigkeit des Rotors bzw. der Zellen. Bei einer konstanten Drehzahl des Zellenrads ergibt sich eine volumetrisch kontinuierliche Förderung, die u.a. ein genaues Austragen und/oder Dosieren von Schüttgut ermöglicht.

Horizontalzellenradschleusen zeichnen sich ferner durch eine vertikale Drehachse aus, wobei das zu fördernde Material innerhalb des Gehäuses in horizontaler Richtung gefördert wird. Diese Schleusen können darüber hinaus über eine vertikal nach unten gerichtete Ausblasung der zu entleerenden Zellen als Austragshilfe verfügen. Zur Vermeidung eines hohen Leckluftanteils, der durch eine Mehrleistung des Gebläses ausgeglichen werden muss, ist aus der DE 40 31 156 A1 eine Zellenradschleuse bekannt, bei der der Ringspalt zwischen Zellenrad und Zellenradgehäuse durch Dichtungen abgedichtet ist (Oberbegriff Anspruch 1).

Horizontalzellenradschleusen in Form von Durchblasschleusen kommen jedoch üblicher Weise ausschließlich in Verbindung mit einer pneumatischen Förderung zum Einsatz, wobei die pneumatische Förderleitung dabei in der Regel direkt durch die zu entleerenden Zellen geführt ist.

Typischerweise weisen Horizontalzellenradschleusen grundsätzlich einen relativ großen Durchmesser von Zellenrad und Gehäuse im Vergleich zur Zellenradhöhe auf, um ein ausreichendes Füllen und Entleeren der Zellen zu gewährleisten. Gleichzeitig sind durch physikalisch benötigte Füllzeiten sowie bei Geräten, welche brennbare Schüttgüter fördern aus Sicherheitsgründen die maximalen Umfangsgeschwindigkeiten des Zellenrades begrenzt. Das theoretische Fördervolumen ergibt sich aus dem Produkt des Zellenradvolumens und der Zellenraddrehzahl. Dadurch müssen entsprechend der gewünschten Fördermenge entsprechend große Zellenraddurchmesser gewählt werden. Zum Erreichen eines guten und effizienten Dosierverhaltens sind außerdem geringe Gehäusespalte erforderlich. Daher wird die Fertigung der Gehäuseteile mit den entsprechenden Genauigkeitsanforderungen mit zunehmendem Durchmesser immer schwieriger und kostenintensiver.In der Regel ist in Prozessen ein kontinuierlicher Schüttgutfluß erforderlich. Daher ist ein weiterer Nachteil bekannter Ausführungen die Begrenzung der minimalen Förderstärke und somit des möglichen Dosierbereichs bedingt durch einen pulsierenden Austrag des Förderguts, da bei geringer Zellenraddrehzahl sich die zu entleerende Zelle vollständig entleert, bevor die nächste gefüllte Zelle die Auslauföffnung erreicht.

Aufgabe der Erfindung ist es daher, zumindest einigen der vorstehend aufgezeigten Schwierigkeiten und Erfordernisse des Standes der Technik wirksam entgegenzutreten, insbesondere Schüttgutablagerungen im Spalt zwischen Zellenrad und Zellenradgehäuse abzuführen.

So besteht insbesondere eine Aufgabe der Erfindung darin, einen alternativen Weg zur Steigerung der Fördermenge bei Einsatz von Horizontalzellenradschleusen aufzuzeigen. Eine weitere Aufgabe besteht insbesondere darin, die Maßanforderungen an gering zu haltende Gehäusespalte zum Erreichen eines weiterhin guten und effizienten Dosierverhaltens zu reduzieren. Ferner besteht eine weitere Aufgabe insbesondere darin, die bei geringen Förderstärken auftretenden Pulsationseffekte zu verringern und somit den Dosierbereich zu vergrößern.

Die Lösung nach der Erfindung ist durch eine Vorrichtung mit den Merkmalen nach Anspruch 1 gegeben. Vorteilhafte Weiterbildungen und Ausführungsformen sind Gegenstand der Unteransprüche.

Demgemäß schlägt die Erfindung eine Vorrichtung zum Fördern von Material, insbesondere zum Austragen und/oder Dosieren von Schüttgut, mittels einer Horizontalzellenradschleuse vor, wobei das Zellenradgehäuse zwischen einer Deckelplatte und einer Bodenplatte angeordnet ist, wobei wenigstens zwei Einlauföffnungen in der Deckelplatte zum Zuführen des zu fördernden Materials und wenigstens zwei Auslauföffnungen in der Bodenplatte zum Entlassen des zu fördernden Materials enthalten sind.

Ein Wesentlicher Vorteil der Erfindung somit darin, dass das Verhältnis von Zellenraddurchmesser zum Fördervolumen durch zwei Einlauföffnungen in der Deckelplatte und zwei Auslauföffnungen in der Bodenplatte derart verbessert ist, dass folglich von einem doppelten Fördervolumen bei gleicher Baugröße im Vergleich zu herkömmlichen Horizontalzellenradschleusen ausgegangen werden kann.

In praktischer Ausführung ist es vorteilhaft, dass jede Einlauföffnung zu jeder Auslauföffnung in einem vorgegebenen Winkel um die Drehachse versetzt angeordnet ist, so dass in vertikaler Richtung eine Überlappung von Einlauföffnungen und Auslauföffnungen vermieden ist. Zu förderndes Material wird folglich zumindest kurzzeitig schleusenartig in einer Zelle umschlossen, nachdem es durch eine Einlauföffnung zugeführt worden ist und bevor es durch eine Auslauföffnung entlassen wird, so dass auch der Ausgleich von Druckdifferenzen ermöglicht ist.

Zweckmäßig sind die Deckelplattenabschnitte zwischen allen Einlauföffnungen jeweils gleich groß und die Bodenplattenabschnitte zwischen allen Auslauföffnungen jeweils gleich groß. Infolge der somit in Umfangsrichtung gleichmäßigen Verteilung der Einlauföffnungen wird das zu fördernde Material auch gleichmäßiger aus einem Vorratssilo oder Aufgabetrichter abgezogen bzw. der Zellenradschleuse zugeführt, als bei einem einseitig angeordneten Einlauf oder mehreren jedoch ungleichmäßig angeordneten Einlauföffnungen.

In alternativer Ausführung ist vorgesehen, die Auslauföffnungen derart um die vertikale Achse verteilt anzuordnen, dass ein gewisser Versatz zu einer gleichmäßigen Verteilung besteht. Der Versatz beträgt hierbei z.B. den Öffnungswinkel einer Zelle dividiert durch die Anzahl der Auslauföffnungen. Somit ergibt sich im Falle zweier Auslauföffnungen ein Versatz zu einer gegenüberliegenden Anordnung von einem halben Zellenöffnungswinkel. Damit erreichen die Zellen wechselweise die Kanten der jeweiligen Auslauföffnung, wodurch die Neigung zu pulsierendem Schüttgutaustrag insbesondere bei geringen Zellenraddrehzahlen reduziert wird.

Ein weiterer wesentlicher Vorteil der Erfindung besteht dann somit darin, dass zusätzlich von deutlich verminderten, z.B. halbierten Pulsationseffekten im Vergleich zu herkömmlichen Horizontalzellenradschleusen ausgegangen werden kann.

Sind eine oberhalb des Zellenradgehäuse angeordnete Aufgabeeinrichtung und eine und unterhalb des Zellenradgehäuse angeordnete Auslass-Anschlusseinrichtung jeweils koaxial zum Zellenradgehäuse angeordnet, ist die Vorrichtung gemäß der Erfindung in der Regel leichter in Anlagen zu integrieren, als solche mit einem axialen Versatz.

In zweckmäßiger Ausgestaltung ist ferner vorgesehen, dass das Zellenradgehäuse eine radial geschlossene Kammer bildet, so dass das darin befindliche Zellrad radial nach außen hin abgeschlossen ist. Von Vorteil hierbei ist insbesondere, dass Leckluft bei Förderung in eine druckbehaftete weitergehende Förderleitung durch Vermeidung radialer Spalte verringert wird.

In erfinderischer Weiterbildung ist die Bodenplatte in radialer Richtung zwischen dem Zellenrad und dem Zellenradgehäuse mit Leckageöffnungen versehen, die einen Luftspülungskanal von dem Zellenradgehäuse in Richtung auf eine unterhalb der Zellenradgehäuse anordenbare Auslass-Anschlusseinrichtung bereitstellen; so können mögliche Schüttgutablagerungen im radialen Spalt zwischen Zellenrad und Zellenradgehäuse auf einfache Weise abgeführt werden. In äußerst wirksamer und einfacher Weise ist ferner vorgesehen, zur Einstellung von axialen Zellenradspalten Distanzbleche an der Auflage der Zellenradnabe zur Rotorwelle vorzusehen und/oder Distanzbleche zwischen Zellenradgehäuse und Deckelplatte oder auch eine einstellbare Verschraubung der Deckelplatte mit dem Zellenradgehäuse vorzusehen.

In der Praxis hat sich ferner ein seitlich angeordneter Antriebsmotor, welcher eine koaxial zum Zellenradgehäuse gelagerte Rotorwelle antreibt, als zweckdienlich erwiesen.

Vorzugsweise treibt diese Rotorwelle sowohl das Zellenrad als auch gleichzeitig ein oberhalb des Zellenradgehäuses angeordnetes Rührwerk an.

Zum Schutz der Antriebselemente wird ferner vorgeschlagen, dass die Rotorwelle mittels einer Lager- und Dichtungseinheit in der Bodenplatte gelagert ist und vom Antriebsmotor zur Rotorwelle eine Antriebskette innerhalb der Bodenplatte verläuft, welche mittels einer Abdeckung zu einer unterhalb der Zellenradgehäuse angeordneten Auslass-Anschlusseinrichtung hin staubdicht geschützt ist.

Weitere Merkmale und Vorteile der Erfindung ergeben sich aus der nachfolgenden Beschreibung eines Beispiels einer bevorzugten Ausführungsform unter Bezugnahme auf die beigefügten Zeichnungen. In den Zeichnungen zeigen:
- Fig. 1: eine Skizze einer Horizontalzellenradschleuse nach der Erfindung, gesehen von der Seite und teilweise geschnitten;
- Fig. 2: eine Skizze der Horizontalzellenradschleuse nach Fig. 1, gesehen von oben, wobei der Aufgabetrichter und das Rührwerk aus Gründen der Übersichtlichkeit weggelassen worden sind; und
- Fig. 3: eine Skizze einer der in Fig. 1 dargestellten Horizontalzellenradschleuse ähnlichen Horizontalzellenradschleuse, gesehen von oben, wobei die Ein- und Auslauföffnungen derart um die vertikale Achse verteilt angeordnet sind, dass ein gewisser Versatz zu einer gleichmäßigen Verteilung besteht und der Aufgabetrichter und das Rührwerk aus Gründen der Übersichtlichkeit weggelassen worden sind.

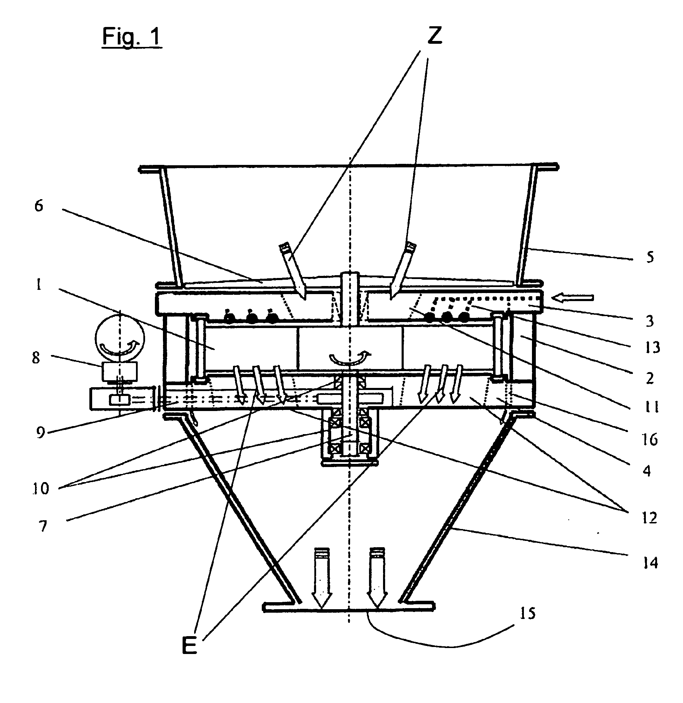

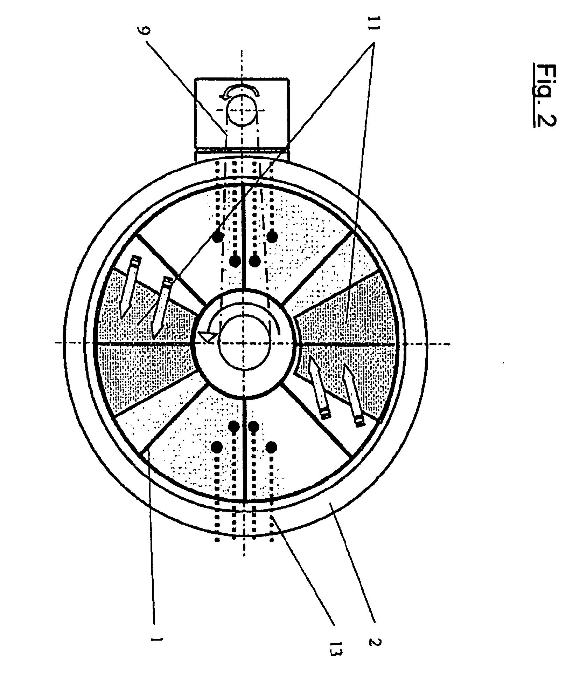

Die Fig. 1 und 2 zeigen eine bevorzugte Ausführungsform einer Horizontalzellenradschleuse gemäß der Erfindung, welche innerhalb einer, in den Figuren nur teilweise dargestellten Vorrichtung zum Fördern von Material, insbesondere zum Austragen und/oder Dosieren von Schüttgut integriert ist. Wie in den Figuren zu sehen, besitzt die Horizontalzellenradschleuse ein in einem Zellenradgehäuse 2 angeordnetes Zellenrad 1, welches um eine vertikale Drehachse drehbar ist, wobei ein durch die Horizontalzellenradschleuse zu förderndes Material von oberhalb des Zellenradgehäuses, wie mit den mit "Z" gekennzeichneten Pfeilen angezeigt, dem Zellenrad zuzuführen ist, innerhalb des Zellenradgehäuses in horizontaler Richtung gefördert wird und aus dem Zellenradgehäuse nach unten, wie mit den mit "E" gekennzeichneten Pfeilen angezeigt, zu entlassen ist. Das Zellenradgehäuse 2 ist erfindungsgemäß zwischen einer Deckelplatte 3 und einer Bodenplatte 4 angeordnet ist, wobei zum Zuführen des zu fördernden Materials in der Deckelplatte wenigstens zwei Einlauföffnungen 11 und zum Entlassen des zu fördernden Materials in der Bodenplatte wenigstens zwei Auslauföffnungen 12 enthalten sind.

Koaxial zum Zellenradgehäuse und oberhalb von diesem ist eine Aufgabeeinrichtung 5 und unterhalb des Zellenradgehäuses ist ebenfalls koaxial zum Zellenradgehäuse eine Auslass-Anschlusseinrichtung angeordnet, welche im dargestellten Beispiel einen Sammeltrichter 14 und einen Anschlussstutzen 15 besitzt, über welchen weiterführende, jedoch nicht dargestellte Anlagenteile, z.B. eine weitergehende, Fördereinrichtung, angeschlossen sind. Ferner ist jede Einlauföffnung 11 zu jeder Auslauföffnung 12 in einem vorgegebenen Winkel um die Drehachse versetzt angeordnet, so dass in vertikaler Richtung eine Überlappung von Einlauföffnungen und Auslauföffnungen vermieden ist. Die in den Figuren dargestellte Horizontalzellenradschleuse stellt folglich zentrische Einlauf- und Auslaufbereiche bereit und eignet sich besonders zur Dosierung von rieselfähigen Schüttgütern in drucklose oder druckbehaftete Räume, wie z.B. pneumatische Förderleitungen.

Über den Aufgabetrichter 5 gelangt das Schüttgut auf die Deckelplatte 3. Dort wird das Schüttgut mittels eines Rührwerks 6 in die Einlauföffnungen 11 verteilt. Unterhalb der Deckelplatte befindet sich das Zellenrad 1, welche das Schüttgut aufnimmt und zu den Auslauföffnungen 12, welche sich in der Bodenplatte 4 befinden, fördert.

Für eine gleichmäßige Verteilung und Förderung des zu fördernden Materials sind zweckmäßig die Deckelplattenabschnitte zwischen allen Einlauföffnungen jeweils gleich groß und auch die Bodenplattenabschnitte zwischen allen Auslauföffnungen jeweils gleich groß.

Bei der dargestellten Ausführungsform verfügt die Deckelplatte 3 über zwei und somit bevorzugt über gegenüberliegende Einlauföffnungen 11, wie auch die Bodenplatte über zwei im Wesentlichen gegenüberliegende Auslauföffnungen 12 verfügt, die zweckmäßiger Weise jedoch folglich um einen Winkel von etwa 90°um die Drehachse versetzt zu den Einlauföffnungen 11 angeordnet sind.

Das Schüttgut wird somit mittels des Rührwerks 6 gleichmäßig in die beiden Einlauföffnungen verteilt, woraufhin das Zellenrad 1 das aufgenommene Schüttgut in Drehrichtung um ca. 90° auf der horizontalen Ebene zu den beiden gegenüberliegenden Auslauföffnungen 12 fördert.

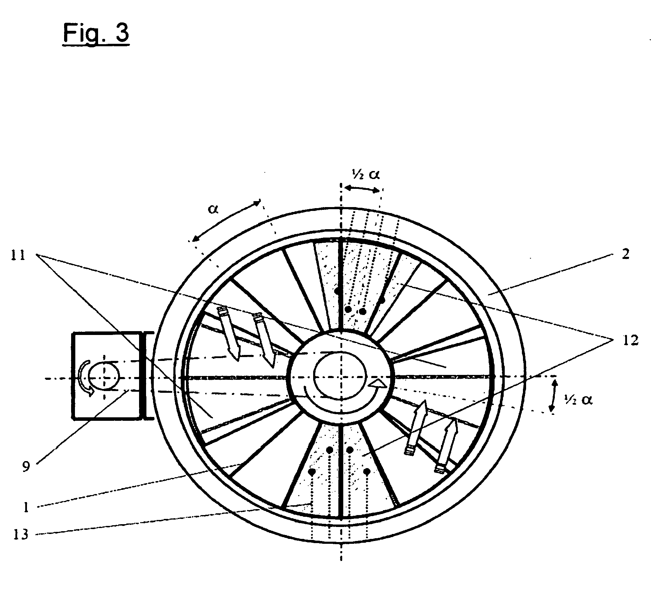

Bei der gemäß Fig. 3 abgewandelten Ausführungsform sind zwar wiederum zwei Einlauföffnungen 11 wie auch zwei Auslauföffnungen 12 vorgesehen, die Ein- und Auslauföffnungen 11 und 12 sind jedoch derart um die vertikale Achse verteilt angeordnet sind, dass ein gewisser Versatz zu einer gleichmäßigen Verteilung besteht. Der Versatz entspricht hierbei bevorzugt dem Öffnungswinkel einer Zelle dividiert durch die Anzahl der Auslauföffnungen. Gemäß Fig. 3 sind die Auslauföffnungen 12 somit zur exakt gegenüberliegenden Anordnung um die Hälfte des Öffnungswinkels α einer Zelle versetzt.

Das Schüttgut wird somit mittels des Rührwerks 6 in die beiden Einlauföffnungen verteilt, woraufhin das Zellenrad 1 das aufgenommene Schüttgut je nach Einlauföffnung in Drehrichtung um ca. 90° auf der horizontalen Ebene zu den beiden Auslauföffnungen 12 fördert. Durch den Versatz von α/2 jeder Paarung aus Ein- und Auslauföffnung erreichen die Zellen wechselweise die Kanten der jeweiligen Auslauföffnung, wodurch die Neigung zu pulsierendem Schüttgutaustrag insbesondere bei geringen Zellenraddrehzahlen reduziert wird.

Zur restlosen Entleerung der Zellen des Zellenrads werden diese durch über den Auslauföffnungen angeordnete Ausblasöffnungen mit Druckluftunterstützung 13 entleert. Die Druckluft kann dabei im Falle einer vorhandenen pneumatischen Förderleitung zweckmäßig von dieser entnommen werden. Das Schüttgut gelangt daraufhin in den Auslass-Sammeltrichter 14 und verlässt am Auslass-Anschlussstutzen 15 die Vorrichtung.

Das Zellenrad 1 ist am äußeren Umfang radial geschlossen ausgeführt. Somit ergeben sich nur axial auf der Ober- und Unterseite Dichtspalte zu Boden- und Deckelplatte. Der Radialspalt zwischen Zellenrad und Gehäuse 2 ist kein Dichtspalt und hat entsprechend keine besonderen Anforderungen an die Maßgenauigkeit. Eventuell dorthin gelangendes Schüttgut durch Leckageverluste kann somit mittels Druckluftunterstützung 13 über die Leckageöffnungen 16 in den Sammeltrichter 14 ausgetragen werden.

Das Zellenrad wird zweckmäßig gemeinsam mit dem Rührwerk mittels einer Rotorwelle 7 angetrieben. Ein vorzugsweise seitlich angeordneter Antriebsmotor 8 treibt eine Antriebskette 9 an, welche wiederum die Rotorwelle antreibt. Die Rotorwelle ist zum Schutz mittels einer Lager- und Dichtungseinheit 10 in der Bodenplatte gelagert. Da es im Können eines Fachmann liegt, eine solche in einer Bodenplatte gelagerte Lager- und Dichtungseinheit für einen ausreichenden Schutz konstruktiv zu gestalten, wird diese nicht näher im Detail beschriebenen. Auch die Antriebskette läuft bevorzugt innerhalb der Bodenplatte und ist mittels einer Abdeckung zum Sammeltrichter 14 hin staubdicht geschützt.

Zur Einstellung der axialen Zellenradspalte sind insbesondere Distanzbleche an der Auflage der Zellenradnabe zur Rotorwelle vorgesehen. Diese erlauben das Einstellen des unteren Spaltmaßes. Das obere Spaltmaß der Deckelplatte kann ebenfalls auf einfache Weise mittels Distanzblechen zwischen Gehäuse und Deckelplatte oder mittels einstellbarer Verschraubung erfolgen.

Die Erfindung weist somit entscheidende Vorteile auf. Die wenigstens doppelte Ausführung des Einlaufs und Auslaufs erlaubt eine höhere Förderleistung bei gleicher Baugröße und somit eine deutliche Kostenreduktion. So ziehen z.B. zwei gegenüberliegende Einläufe das Material gleichmäßiger aus einem Vorratssilo oder Aufgabetrichter ab, als ein einseitig angeordneter Einlauf. Um einen bestimmten Winkel, z.B. um den halben Zellenöffnungswinkel, versetzt zu einer gegenüberliegenden Anordnung angeordnete Auslauföffnungen reduzieren die Neigung zu pulsierendem Austrag bei geringen Förderstärken und erweitern somit möglichen Dosierbereich einer Baugröße. Auch lässt sich eine Bauweise verfahrenstechnischer Maschinen mit axial angeordneten Einlauf- und Auslaufbereichen in der Regel leichter in Anlagen integrieren, als solche mit einem axialen Versatz.

Zusätzlich verfügt die beschriebene Vorrichtung gemäß der Erfindung zweckmäßig über ein radial geschlossenes Zellenrad, um insbesondere Leckluft bei Förderung in eine druckbehaftete Förderleitung durch Vermeidung radialer Spalte zu verringern. Aufgrund der beschriebenen Leckageöffnungen in der Bodenplatte, die somit Luftspülungskanäle von dem Zellenradgehäuse in Richtung auf eine unterhalb der Zellenradgehäuse anordenbare Auslass-Anschlusseinrichtung bereitstellen, können jedoch auf überraschend einfache Weise mögliche Schüttgutablagerungen im radialen Spalt zwischen Zellenrad und Zellenradgehäuse mittels Luftspülung abgeführt werden, z.B. in den dargestellten Auslass-Sammeltrichter 14.

Der Erfinder ermöglicht somit ferner, z.B. im Bereich der Kohlestaubdosierung, die Herstellkosten der Gehäusebauteile und des Zellenrades bei gleichen Förderleistungen zu reduzieren.

### Bezugszeichenliste:

- 1.: Zellenrad
- 2.: Gehäuse
- 3.: Deckelplatte
- 4.: Bodenplatte
- 5.: Aufgabetrichter
- 6.: Rührwerk
- 7.: Rotorwelle
- 8.: Antriebsmotor
- 9.: Antriebskette
- 10.: Lager und Dichtungseinheit
- 11.: Einlauföffnung
- 12.: Auslauföffnung
- 13.: Ausblasung Zellenradzellen und Radialspalt
- 14.: Sammeltrichter einer Auslass-Anschlusseinrichtung
- 15.: Anschlussstutzen einer Auslass-Anschlusseinrichtung
- 16.: Leckageöffnungen

## Patentansprüche

1. Vorrichtung zum Fördern von Material, insbesondere zum Austragen und/oder Dosieren von Schüttgut, mittels
- einer Horizontalzellenradschleuse,
- - wobei die Horizontalzellenradschleuse ein in einem Zellenradgehäuse (2) angeordnetes Zellenrad (1) besitzt,
- - - welches um eine vertikale Drehachse drehbar ist,
- wobei ein durch die Horizontalzellenradschleuse zu förderndes Material von oberhalb des Zellenradgehäuses dem Zellenrad zuzuführen ist,
- innerhalb des Zellenradgehäuses in horizontaler Richtung gefördert wird und
- aus dem Zellenradgehäuse nach unten zu entlassen ist, - wobei das Zellenradgehäuse (2) zwischen einer Deckelplatte (3) und einer Bodenplatte (4) angeordnet ist und,
- wenigstens zwei Einlauföffnungen (11) in der Deckelplatte zum Zuführen des zu fördernden Materials und wenigstens zwei Auslauföffnungen (12) in der Bodenplatte zum Entlassen des zu fördernden Materials enthalten sind, das Zellenradgehäuse eine radial geschlossene Kammer bildet, und das darin befindliche Zellrad radial nach außen hin abgeschlossen ist, **dadurch gekennzeichnet, dass** die Bodenplatte in radialer Richtung zwischen dem Zellenrad und dem Zellenradgehäuse mit Leckageöffnungen (16) versehen ist, die einen Luftspülungskanal von dem Zellenradgehäuse in Richtung auf eine unterhalb des Zellenradgehäuses anordenbare Auslass-Anschlusseinrichtung (14, 15) bereitstellen.

2. Vorrichtung nach Anspruch 1, ferner **dadurch gekennzeichnet, dass** die Deckelplattenabschnitte zwischen allen Einlauföffnungen jeweils gleich groß sind und die Bodenplattenabschnitte zwischen allen Auslauföffnungen jeweils gleich groß sind.

3. Vorrichtung nach Anspruch 1, ferner **dadurch gekennzeichnet, dass** die Einlauföffnungen 11 und Auslauföffnungen 12 derart um die vertikale Achse verteilt angeordnet sind, dass ein gewisser Versatz zu einer gleichmäßigen Verteilung besteht, insbesondere ein Versatz, der dem Öffnungswinkel einer Zelle dividiert durch die Anzahl der Auslauföffnungen 12 entspricht.

4. Vorrichtung nach einem der Ansprüche 1 bis 3,
**gekennzeichnet durch** einen koaxial zum Zellenradgehäuse und oberhalb diesem angeordneten Aufgabeeinrichtung (5) und einer koaxial zum Zellenradgehäuse und unterhalb diesem angeordneten Auslass-Anschlusseinrichtung (14, 15).

5. Vorrichtung nach einem der vorstehenden Ansprüche, ferner **gekennzeichnet dadurch, dass** zur Einstellung von axialen Zellenradspalten Distanzbleche an der Auflage der Zellenradnabe zur Rotorwelle vorgesehen sind.

6. Vorrichtung nach einem der vorstehenden Ansprüche, ferner **gekennzeichnet dadurch, dass** zur Einstellung von axialen Zellenradspalten Distanzbleche zwischen Zellenradgehäuse und Deckelplatte vorgesehen sind oder eine einstellbare Verschraubung der Deckelplatte mit der Zellenradgehäuse vorgesehen ist.

7. Vorrichtung nach einem der vorstehenden Ansprüche, ferner **gekennzeichnet durch** einen seitlich angeordneten Antriebsmotor (8), welcher eine coaxial zum Zellenradgehäuse gelagerte Rotorwelle (7) antreibt.

8. Vorrichtung nach vorstehendem Anspruch, ferner **dadurch gekennzeichnet, dass** die Rotorwelle sowohl das Zellenrad als auch ein oberhalb des Zellenradgehäuses angeordnetes Rührwerk (6) antreibt.

9. Vorrichtung nach einem der zwei vorstehenden Ansprüche, wobei die Rotorwelle mittels einer Lager- und Dichtungseinheit (10) in der Bodenplatte gelagert ist und vom Antriebsmotor zur Rotorwelle eine Antriebskette (9) innerhalb der Bodenplatte verläuft, welche mittels einer Abdeckung zu einer unterhalb der Zellenradgehäuse angeordneten Auslass-Anschlusseinrichtung (14, 15) hin staubdicht geschützt ist.

## Claims

1. Apparatus for conveying material, in particular for discharging and/or metering bulk material, by means of
- a horizontal rotary vane feeder,
- - wherein the horizontal rotary vane feeder has a cellular wheel (1) arranged in a cellular wheel housing (2),
- - - said cellular wheel being rotatable about a vertical axis of rotation,
- wherein a material to be conveyed by means of the horizontal rotary vane feeder is to be supplied from above the cellular wheel housing to the cellular wheel,
- is conveyed inside the cellular wheel housing in the horizontal direction and
- is to be released downward out of the cellular wheel housing,
- wherein the cellular wheel housing (2) is arranged between a cover plate (3) and a base plate (4), and
- at least two inlet openings (11) are included in the cover plate for supplying the material to be conveyed and at least two outlet openings (12) are included in the base plate for releasing the material to be conveyed, the cellular wheel housing forms a radially closed chamber, and the cellular wheel located therein is closed off radially to the outside, **characterized in that** the base plate is provided in the radial direction between the cellular wheel and the cellular wheel housing with leakage openings (16) which provide an air flushing channel from the cellular wheel housing in the direction of an outlet connection device (14, 15) which can be arranged below the cellular wheel housing.

2. Apparatus according to Claim 1, additionally **characterized in that** the cover plate sections between all the inlet openings are the same size in each case and the base plate sections between all the outlet openings are the same size in each case.

3. Apparatus according to Claim 1, additionally **characterized in that** the inlet openings 11 and the outlet openings 12 are arranged distributed in such a manner about the vertical axis that there is a certain offset with respect to a uniform distribution, in particular an offset which corresponds to the opening angle of a cell divided by the number of outlet openings 12.

4. Apparatus according to one of Claims 1 to 3, **characterized by** a feeding device (5), which is arranged coaxially with respect to the cellular wheel housing and above said cellular wheel housing, and an outlet connection device (14, 15), which is arranged coaxially with respect to the cellular wheel housing and below said cellular wheel housing.

5. Apparatus according to one of the preceding claims, additionally **characterized in that** for adjusting axial cellular wheel gaps, spacer sheets are provided on the bearing surface of the cellular wheel hub to the rotor shaft.

6. Apparatus according to one of the preceding claims, additionally **characterized in that** for adjusting axial cellular wheel gaps, spacer sheets are provided between the cellular wheel housing and the cover plate or an adjustable screw connection of the cover plate to the cellular wheel housing is provided.

7. Apparatus according to one of the preceding claims, additionally **characterized by** a laterally arranged drive motor (8), which drives a rotor shaft (7), which is mounted coaxially with respect to the cellular wheel housing.

8. Apparatus according to the preceding claim, additionally **characterized in that** the rotor shaft drives both the cellular wheel and an agitating system (6) which is arranged above the cellular wheel housing.

9. Apparatus according to either of the two preceding claims, wherein the rotor shaft is mounted in the base plate by means of a bearing and sealing unit (10) and a drive chain (9) extends inside the base plate from the drive motor to the rotor shaft, said drive chain being protected in a dust-tight manner by means of a cover toward an outlet connection device (14, 15) which is arranged below the cellular wheel housing.

## Revendications

1. Dispositif pour transporter des matériaux, en particulier pour décharger et/ou doser des produits en vrac, au moyen
- d'une vanne à roue cellulaire horizontale,
-- la vanne à roue cellulaire horizontale possédant une roue cellulaire (1) disposée dans un carter de roue cellulaire (2),
--- qui peut tourner autour d'un axe de rotation vertical,
- un matériau à transporter par la vanne à roue cellulaire horizontale devant être acheminé à la roue cellulaire par le dessus du carter de roue cellulaire,
- étant transporté dans la direction horizontale à l'intérieur du carter de roue cellulaire et
- devant être évacué vers le bas hors du carter de roue cellulaire, - le carter de roue cellulaire (2) étant disposé entre une plaque de recouvrement (3) et une plaque de fond (4) et
- au moins deux ouvertures d'entrée (11) étant réalisées dans la plaque de recouvrement pour acheminer le matériau à transporter et au moins deux ouvertures de sortie (12) étant réalisées dans la plaque de fond pour évacuer le matériau à transporter, le carter de roue cellulaire formant une chambre radialement fermée et la roue cellulaire s'y trouvant étant close radialement vers l'extérieur, **caractérisé en ce que** la plaque de fond est pourvue d'ouvertures de fuite (16) dans la direction radiale entre la roue cellulaire et le carter de roue cellulaire, lesquelles constituent un canal de vidange d'air depuis le carter de roue cellulaire dans la direction d'un dispositif de raccordement de sortie (14, 15) pouvant être disposé en dessous du carter de roue cellulaire.

2. Dispositif selon la revendication 1, **caractérisé en outre en ce que** les sections de plaque de recouvrement entre toutes les ouvertures d'entrée sont à chaque fois de même taille et les sections de plaque de fond entre toutes les ouvertures de sortie sont à chaque fois de même taille.

3. Dispositif selon la revendication 1, **caractérisé en outre en ce que** les ouvertures d'entrée (11) et les ouvertures de sortie (12) sont réparties autour de l'axe vertical de telle sorte qu'il existe un certain décalage par rapport à une répartition uniforme, notamment un décalage qui correspond à l'angle d'ouverture d'une cellule divisé par le nombre des ouvertures de sortie (12).

4. Dispositif selon l'une quelconque des revendications 1 à 3, **caractérisé par** un dispositif de chargement (5) disposé coaxialement par rapport au carter de roue cellulaire et au-dessus de celui-ci, et un dispositif de raccordement de sortie (14, 15) disposé coaxialement au carter de roue cellulaire et en dessous de celui-ci.

5. Dispositif selon l'une quelconque des revendications précédentes, **caractérisé en outre en ce que** pour l'ajustement de fentes de roue cellulaire axiales, des tôles d'espacement sont prévues sur l'appui du moyeu de roue cellulaire par rapport à l'arbre de rotor.

6. Dispositif selon l'une quelconque des revendications précédentes, **caractérisé en outre en ce que** pour l'ajustement de fentes de roue cellulaire axiales, des tôles d'espacement sont prévues entre le carter de roue cellulaire et la plaque de recouvrement ou un vissage ajustable de la plaque de recouvrement au carter de roue cellulaire est prévu.

7. Dispositif selon l'une quelconque des revendications précédentes, **caractérisé en outre par** un moteur d'entraînement (8) disposé latéralement, qui entraîne un arbre de rotor (7) monté coaxialement par rapport au carter de roue cellulaire.

8. Dispositif selon la revendication précédente, **caractérisé en outre en ce que** l'arbre de rotor entraîne à la fois la roue cellulaire ainsi qu'un mécanisme d'agitation (6) disposé au-dessus du carter de roue cellulaire.

9. Dispositif selon l'une quelconque des deux revendications précédentes, dans lequel l'arbre de rotor est supporté au moyen d'une unité de palier et d'étanchéité (10) dans la plaque de fond et une chaîne d'entraînement (9) s'étend depuis le moteur d'entraînement jusqu'à l'arbre de rotor à l'intérieur de la plaque de fond, laquelle est protégée contre la poussière au moyen d'un recouvrement vers un dispositif de raccordement de sortie (14, 15) disposé en dessous du carter de roue cellulaire.
